Europäisches Patentamt

European Patent Office

Office européen des brevets

(11) Veröffentlichungsnummer: **0 206 984 B1**

# (12) EUROPÄISCHE PATENTSCHRIFT

(45) Veröffentlichungstag der Patentschrift:
20.02.91 Patentblatt 91/08

(51) Int. Cl.⁵: **G05D 13/62**, G05B 19/18, G05B 13/02, B23F 5/00

(21) Anmeldenummer: 86810216.1

(22) Anmeldetag: 16.05.86

(54) Verfahren und Vorrichtung zur Regelung der Drehzahl einer Spindel einer Zahnradbearbeitungsmaschine.

(30) Priorität: 26.06.85 CH 2735/85

(43) Veröffentlichungstag der Anmeldung:
30.12.86 Patentblatt 86/52

(45) Bekanntmachung des Hinweises auf die Patenterteilung:
20.02.91 Patentblatt 91/08

(84) Benannte Vertragsstaaten:
CH DE FR GB IT LI

(56) Entgegenhaltungen:
EP-A- 0 140 831
DE-A- 2 441 192
DE-A- 2 744 562
DE-B- 1 267 315
DE-B- 2 724 602
DE-B- 2 724 664

(56) Entgegenhaltungen:
TZ FUER PRAKT. METALLBEARB. Heft 9, 70(1976), Seiten 287-289; H.J. KLUGE u.a.: "Elektronische Zwangslaufeinrichtung für Verzahnmaschinen"
DEUTSCHE ELEKTROTECHNIK 10. Jahrgang, Heft 3, März 1956, DE, Seiten 23, 24; W. HORNAUER: "Die automatisierte Fabrik"
INSPEC PATENT ASSOCIATED LITERATURE J252-7502-N, Band 20, Nr. 7, Juli 1984, Seite 374, Zusammenfassung vom "Journal of the institution of electronics and telecommunication engineers"; H.S. RAINA: "A new type of sample & hold circuit"

(73) Patentinhaber: REISHAUER AG.
Limmatstrasse 87
CH-8005 Zürich (CH)

(72) Erfinder: Rebsamen, Roland
Dorfstrasse 16
CH-9535 Wilen (CH)

(74) Vertreter: White, William et al
Patentanwalts-Bureau Isler AG Postfach 6940
CH-8023 Zürich (CH)

## Beschreibung

Ein Verfahren und eine Vorrichtung gemäss den Oberbegriffen der Ansprüche 1 und 7 ist aus den CH-Patentschriften 629 989 und 629 990 bekannt. Bei diesen bekannten Verfahren ist sowohl mit der Werkzeug- als auch mit der Werkstückspindel je ein hochauflösender inkrementaler Drehwinkelgeber verbunden. Die schneller drehende Werkzeugspindel wird konstant angetrieben. Der ihr zugeordnete Winkelgeber liefert einen Sollwert für den Regler zum Antrieb der langsamer drehenden Werkstückspindel. Durch entsprechende Auslegung des Reglers und des Antriebs der Werkstückspindel kann die Werkstückspindel winkelrichtig und synchron der Werkzeugspindel nachgeführt werden.

Allerdings sind dabei nicht beliebig hohe Steifigkeiten des Regelkreises erreichbar. Die erreichbare Regelgüte bestimmt aber weitgehend die Genauigkeit der zu bearbeitenden Verzahnung. Eine Erhöhung der Kreisverstärkung führt nicht zum Ziel, weil wegen der im geregelten Antrieb liegenden notwendigerweise vorhandenen Schwungmassen zwangsläufig Phasendrehungen in der Regelstrecke auftreten, die bei zu hoher Kreisverstärkung zu Instabilität führen. Theoretisch wäre es zwar möglich, mit einem Zustandsregler hoher Ordnung das gewünschte Verhalten zu erreichen, dies würde aber neben zusätzlichen, extrem genauen und dadurch teuren Messignalgebern eine komplizierte Verrechnung unzähliger Parameter in sehr kurzen Zeitintervallen erfordern, wozu heute weder die Mathematik noch die erforderlichen wirtschaftlich vertretbaren schnellen Rechner verfügbar sind.

Der Erfindung liegt deshalb die Aufgabe zugrunde, das eingangs genannte Verfahren und die zugehörige Vorrichtung so weiterzubilden, dass mit einfachen Mitteln eine wesentliche Verbesserung der Genauigkeit des Synchronlaufes erzielt wird. Diese Aufgabe wird verfahrensmässig durch die im Kennzeichen des Anspruchs 1 und vorrichtungsmässig durch die im Kennzeichen des Anspruchs 7 angegebenen Mittel gelöst.

Die erfindungsgemässe Lösung nützt einige charakteristische Eigenschaften einer im kontinuierlichen Wälzverfahren arbeitenden Zahnradbearbeitungsmaschine aus :

Beim erwähnten kontinuierlichen Abwälzverfahren werden auf das Werkstück neben radialen und axialen hauptsächlich tangentiale Kräfte ausgeübt, die durch entsprechende Drehmomente von der Werkstückspindel bzw. vom Werkstückspindelantrieb aufgebracht werden müssen. Dieses auf die Werkstückspindel wirkende Drehmoment hat einen periodischen Verlauf, dessen Frequenz mit der Zahneingriffsfrequenz zwischen Werkzeug und Werkstück übereinstimmt. Infolge der begrenzten dynamischen Steifigkeit des Werkstückantriebs entstehen durch die periodischen Drehmomentänderungen Drehwinkelfehler an der Werkstückspindel und damit Geometriefehler an der zu bearbeitenden Verzahnung. Der Drehmomentenverlauf selbst hängt von vielen Faktoren ab, wie Form der Verzahnung, Zähnezahl, Schrägungswinkel, Spandicke, etc., er ist weitgehend konstant während des Bearbeitens der ganzen Zahnbreite, ändert sich dagegen beim Eintritt bzw. beim Austritt des Werkzeuges aus der Verzahnung an den Stirnseiten des Werkstücks. Die Aenderungsgeschwindigkeit ist jedoch im Vergleich zur Zahneingriffsfrequenz langsam, sie hängt nur ab von der Werkzeugvorschubgeschwindigkeit in axialer Richtung des Werkstücks.

Nachfolgend wird ein Ausführungsbeispiel der Erfindung anhand der Zeichnung erläuter. Darin zeigt :

Fig. 1 einen charakteristischen Verlauf des Drehmomentes der Werkstückspindel,

Fig. 2 die Regelabweichung während einer Periode beim Drehmomentenverlauf nach Fig. 1, und

Fig. 3 eine schematische Darstellung eines Reglers.

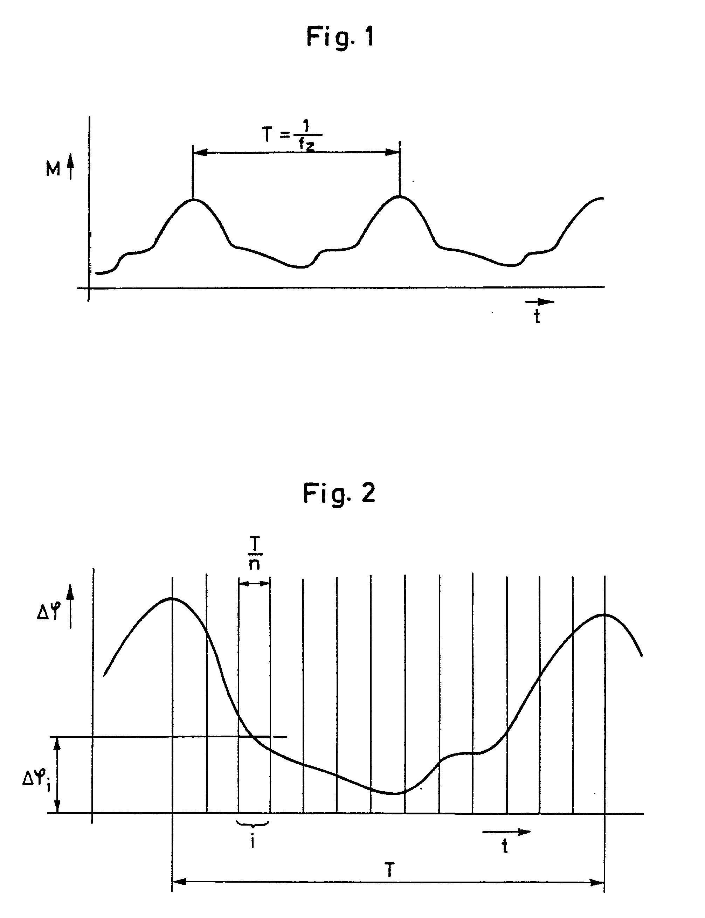

In Fig. 1 ist ein charakteristischer Verlauf des Drehmomentes der Werkstückspindel dargestellt. Das Drehmoment M ändert sich periodisch mit der Periodendauer T, die umgekehrt proportional zur Zahneimgriffsfrequenz $f_z$ des Werkzeuges ist. Dieser Drehmomentenverlauf hat wegen der begrenzten Steifigkeit des Werkstückspindelantriebs eine periodische Regelabweichung $\Delta\varphi_l$ (Fig. 2) zur Folge.

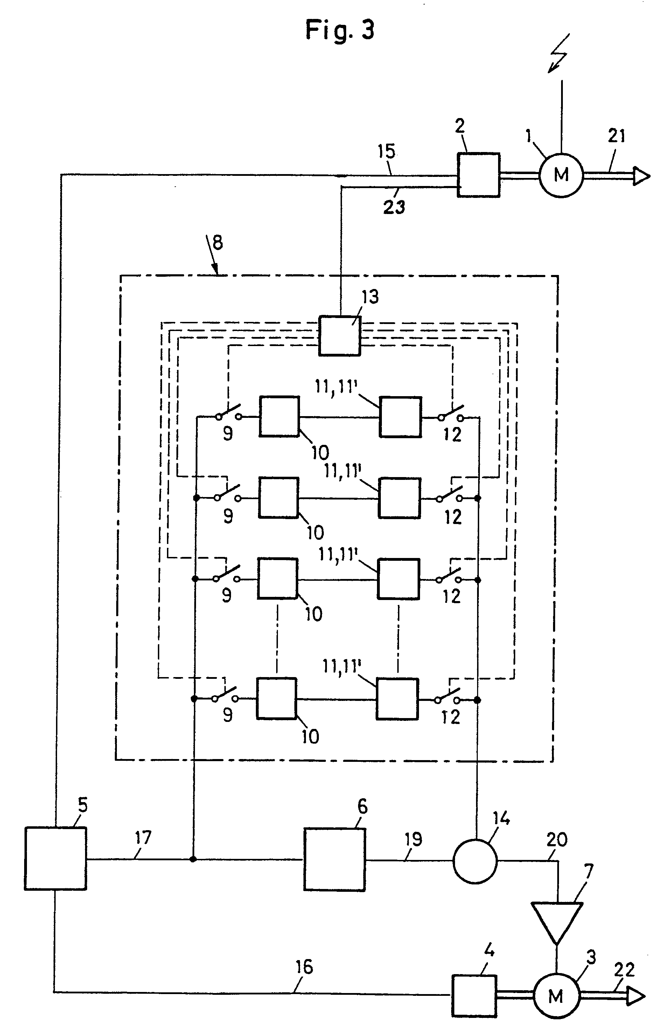

In Fig. 3 ist die Regeleinrichtung schematisch dargestellt : Ein Werkzeugantriebsmotor 1 treibt eine Werkzeugspindel 21. Mit der Werkzeugspindel 21 ist ein Inkrementalgeber 2 zur Erfassung des Drehwinkels der Spindel 21 verbunden. Ein Werkstückantriebsmotor 3 treibt eine Werkstückspindel 22, die miteinem weiteren Inkrementalgeber 4 zur Erfassung des Drehwinkels der Spindel 22 verbunden ist. Die Messwerte 15, 16 der Geber 2, 4 werden einem Differenzbildner 5 (Soll-Istwertvergleich) zugeführt, der die Regelabweichung 17 bildet und einem Regler 6 zuführt. Dem Regler 6 ist ein Leistungs-Servoverstärker 7 nachgeschaltet, der den Motor 3 treibt. Soweit ist die Vorrichtung aus den CH-Patentschriften 629 989 und 629 990 bekannt.

Zur Verbesserung des Regelverhaltens ist parallel zum Regler 6 ein Störgrössenbeobachter 8 geschaltet, dem einerseits die Regelabweichung 17, anderseits ein (von einem Index des Gebers 2 gewonnenes) Synchronisiersignal 23 zugeführt wird. Das Synchronisiersignal könnte auch vom Messignal 15 oder 16 des Gebers 2 bzw. 4 oder von einem separaten synchron mit einer der Spindeln 21, 22 drehenden Bauteil abgeleitet werden. Der Ausgang 18 des Störgrössenbeobachters 8 wird in einem Summierglied 14 dem Ausgang 19 des Reglers 6 hinzu addiert, wobei der Ausgang 20 des Summiergliedes 14 dem Verstärker 17 eingegeben wird.

Im Störgrössenbeobachter 8 wird die Regelabweichung 17 durch eine n-fache Multiplexschaltung 9 sequentiell je einer von n Sample-and-hold Schaltungen 10 zugeführt, wobei die Multiplexschaltung 9 durch eine Synchronisierschaltung 13 angesteuert wird, die die Periode unabhängig vom Verlauf der Regelabweichung 17 nämlich aus dem Signal 23 des Inkrementalgebers 2 bestimmt. Der Verlauf der Regelabweichung wird also innerhalb einer Periode T in n Inkrementen jeweils einzeln gespeichert, wobei jeweils der Mittelwert $\Delta\varphi_i$ innerhalb des Inkrementes i der entsprechenden i-ten Schaltung 10 zugeführt wird (Fig. 2).

Die Inhalte der Sample-and-hold Schaltungen 10 werden mittels je eines Integrators 11 integriert. In der darauf folgenden Periode wird dann aus den Inhalten der Integratoren 11 durch eine n-fache Demultiplexschaltung 12 sequentiell ein Korrektursignal 18 gebildet, das in einer Summierschaltung 14 zum Stellsignal 19 des Reglers 6 addiert wird. Die Schaltung 12 wird dabei ebenfalls durch die Synchronisierschaltung 13 gesteuert. Gleichzeitig wird jeweils in die zugehörige Sample-and-hold Schaltung 10 der neue zugehörige Wert der Regelabweichung 17 eingelesen.

Die Wirkung des Störgrössenbeobachters 8 entspricht wegen des ständigen Integrierens der Regelabweichungen in den Integratoren 11 einer Integralregelung, so dass der Einfluss der Störgrösse im Idealfall auf Null weggeregelt werden kann. Damit ist die gemessene und gespeicherte Regelabweichung 17 über die ganze Dauer einer Periode ständig Null und das in den Integratoren 11 sequentiell gespeicherte Korrektursignal entspricht exakt dem Verlauf der Störgrösse über eine Periode, also dem Verlauf des Drehmomentes über eine Umdrehung der Werkzeugspindel. Je feiner die Periode T unterteilt wird, desto besser ist naturgemäss die Annäherung an den wirklichen Störgrössenverlauf.

Damit wird erreicht, dass das bei der Bearbeitung auftretende Drehmoment vorprogrammiert an der Werkstückspindel erzeugt wird. Dadurch, dass der erzeugte Momentenverlauf den tatsächlich auftretenden Bearbeitungskräften angepasst wird, funktioniert die Einrichtung auch dann einwandfrei, wenn das Werkzeug an den Stirnseiten des Werkstücks ein- oder austritt, d.h. auch wenn die Bearbeitungskräfte ändern. Es ist jedoch dafür zu sorgen, dass sich die gespeicherten Werte nur mit einer begrenzten, gegenüber der Zahneingriffsfrequenz $f_z$ langsamen Geschwindigkeit verändern können.

Der Verlauf der Störgrösse kann auch anders als über die Regelabweichung 17 erfasst werden. Beispielsweise liefert auch das Stellsignal 19 ein Mass für die Störgrösse, welches dem Störgrössenbeobachter 8 aufgeschaltet werden könnte.

Bei geringer Verstärkung bei der Uebertragung der Regelabweichung 17 auf die Sample-and-hold Schaltungen 10 bzw. kleiner Integrationskonstante der Integratoren 11 kann der Einfluss stochastischer Störungen des Momentenverlaufs gering gehalten werden. Dies entspricht einem geringen I-Anteil eines PI-Reglers. Dementsprechend passt sich allerdings das Korrektursignal 18 nur relativ langsam einer Aenderung des Drehmomentenverlaufs von Periode zu Periode an.

Statt der Integratoren 11 können auch n-Speicher 11' eingesetzt werden, in welchen dem Speicherinhalt taktweise gesteuert durch die Synchronisierschaltung 13, jeweils nach dem Einlesen eines neuen Wertes in die entsprechende Sample-and-hold Schaltung 10 der Inhalt dieser Schaltung 10 hinzu addiert wird.

Das beschriebene Verfahren ist allgemein anwendbar bei Prozessen, die eine periodisch ändernde Störgrösse aufweisen, deren Periodendauer unabhängig von der Störgrösse feststellbar ist, wenn die Störgrössenschwankungen innerhalb einer Periode wesentlich grösser sind als die Abweichungen aufeinanderfolgender Perioden voneinander. Diese Voraussetzungen sind bei vielen mechanischen Bearbeitungsprozessen, jedoch häufig auch z.B. bei chemischen Prozessen, bei Optimierungsprozessen usw. erfüllt. Das Verfahren ist besonders zweckmässig für sehr rasch ablaufende periodische Prozesse, die aus Stabilitätsgründen gewöhnlich nicht mit einem PI-Regler geregelt werden können.

## Ansprüche

1. Verfahren zur Regelung der Drehzahl einer Spindel (22) einer im kontinuierlichen Abwälzverfahren arbeitenden Zahnradbearbeitungsmaschine, wobei die Spindel (22) einen durch einen elektronischen Regler (6) geregelten Antrieb (3) aufweist, der einen Synchronlauf mit einer zweiten Spindel (21) sicherstellt, wobei der Drehwinkel beider Spindeln gemessen wird, dem Regler (6) das Messignal (15) des Drehwinkelgebers (2) der zweiten Spindel (21) als Sollwert vorgegeben wird, und wobei sich eine Störgrösse entsprechend dem variierenden Zahneingriff periodisch ändert, dadurch gekennzeichnet, dass die Störgrösse über mindestens eine Periode gespeichert wird, und dass der gespeicherte Verlauf der Störgrösse synchron mit einem unabhängig von der Störgrösse ermittelten Signal (23) in einer nachfolgenden Periode der Stellgrösse (19) des Reglers hinzu addiert wird.

2. Verfahren nach Anspruch 1, dadurch gekennzeichnet, dass als Signal (23) ein Indexsignal verwendet wird, das jeweils die vollen Umdrehungen der Werkzeugspindel (21) markiert.

3. Verfahren nach Anspruch 1, dadurch gekennzeichnet, dass das Signal (23) aus dem Messignal (16) des Winkelgebers (4) der Werkstückspindel (22) abgeleitet wird.

4. Verfahren nach einem der Ansprüche 1 bis 3, dadurch gekennzeichnet, dass zur Ermittlung der Störgrösse die Regelabweichung (17) verwendet wird.

5. Verfahren nach Anspruch 4, dadurch gekennzeichnet, dass die Regelabweichung (17) während einer Periode sequentiell in je einen von mehreren Speichern (10) eingelesen wird, der Inhalt jedes Speichers (10) in je einem Integrator (11) integriert wird, und dass aus den Inhalten der Integratoren (11) sequentiell ein Korrektursignal (18) gebildet wird, welches durch das Signal (23) synchronisiert zur Stellgrösse (19) des Reglers (6) addiert wird.

6. Verfahren nach Anspruch 4, dadurch gekennzeichnet, dass die Regelabweichung (17) während einer Periode sequentiell in je einen von mehreren Speichern (10) eingelesen wird, dass die Inhalte der Speicher (10) im Takt mit dem Signal (23) dem Inhalt je eines zugehörigen zweiten Speichers (11') hinzu addiert werden, und dass aus den Inhalten der zweiten Speicher (11') sequentiell ein Korrekturesignal (18) gebildet wird, welches durch das Signal (23) synchronisiert zur Stellgrösse (19) des Reglers (6) addiert wird.

7. Vorrichtung zur Durchführung des Verfahrens nach einem der Ansprüche 1 bis 6, wobei die erste Spindel (22) mit einem ersten Drehwinkelgeber (4) und die zweite Spindel (21) mit einem zweiten Drehwinkelgeber (2) verbunden sind, gekennzeichnet durch eine Speicherschaltung (10) zur Speicherung des Störgrössenanteils in diskreten Zeitintervallen innerhalb der Periode (T) und durch eine Addierschaltung (14) zum Addieren des Speicherinhaltes zur Stellgrösse (19) des Reglers (6) synchron mit dem Signal (23).

8. Vorrichtung nach Anspruch 7, dadurch gekennzeichnet, dass die Speicherschaltung mehrere Speicher (10) umfasst, und dass den Speichern (10) eine Multiplexschaltung (9) vorgeschaltet ist, die durch das Signal (23) ansteuerbar ist.

9. Vorrichtung nach Anspruch 8 zur Durchführung des Verfahrens nach Anspruch 5, dadurch gekennzeichnet, dass jedem Speicher (10) je ein Integrator (11) nachgeschaltet ist, und dass die Integratoren (11) über eine vom Signal (23) angesteuerte Demultiplexschaltung (12) mit der Addierschaltung (14) verbunden sind.

**Claims**

1. A method of controlling the speed of a spindle (22) of a continuous gear-hobbing machine, the spindle (22) having a drive (3) controlled by an electronic controller (6) which ensures synchronism with a second spindle (21), the angle of rotation of both spindles being measured, the measured-value signal (15) of the angle detector (2) of the second spindle (21) being applied to the controller (6) as set value, a deviation varying periodically in accordance with the varying tooth meshing, characterised in that the deviation is stored over at least one period and in a subsequent period the stored pattern of the deviation is added on synchronously with a signal (23) detected independently of the deviation to the manipulated variable (19) of the controller (6).

2. A method according to claim 1, characterised in that an indexing or marking signal marking complete revolutions of the tool spindle (21) is used as signal (23).

3. A method according to claim 1, characterised in that the signal (23) is derived from the measured-value signal (16) of the angle detector (4) of the workpiece spindle (22).

4. A method according to any of claims 1 to 3, characterised in that the error signal (17) is used to ascertain the deviation.

5. A method according to claim 4, characterised in that the error signal (17) is read sequentially into one each of a number of stores (10) during a period, the content of each store (10) is integrated in one integrator (11) each and a correction signal (18) is formed sequentially from the contents of the integrators (11) and is added, synchronized by the signal (23), to the manipulated variable (19) of the controller (6).

6. A method according to claim 4, characterised in that the error signal (17) is read sequentially into one each of a number of stores (7) during a period, the contents of the stores (10) are added in time with the signal (23) to the content of each one of an associated second store (11') and a correction signal (18) is formed sequentially from the contents of the second stores (11') and is added, synchronized by the signal (23), to the manipulated variable (19) of the controller (6).

7. A system for performing the method according to any of claims 1 to 6, the first spindle (22) being connected to a first angle detector (4) and the second spindle (21) being connected to a second angle detector (2), characterised by a store circuit arrangement (10) for storing the deviation proportion in discrete time intervals within the period (T) and by an adding circuit arrangement (14) for adding the store content to the manipulated variable (19) of the controller (6) in synchronism with the signal (23).

8. A system according to claim 7, characterised in that the store circuit arrangement comprises a number of stores (10) each preceded by a multiplex circuit arrangement (9) triggerable by the signal (23).

9. A system according to claim 8 for performing the method according to claim 5, characterised in that each store (10) is followed by an integrator (11) and the integrators (11) are connected to the adding circuit arrangement (10) by way of a demultiplexing circuit arrangement (12) triggered by the signal (23).

## Revendications

1. Procédé de régulation de la vitesse de rotation d'une broche (22) d'une machine d'usinage de roue dentée à fraise-mère développante, travaillant en continu, la broche (22) présentant un entraînement (3) régulé par un dispositif (6) de régulation électronique, qui assure une marche en synchronisme avec une deuxième broche (21), l'angle de rotation des deux broches étant mesuré et le signal (15) de mesure du capteur (2) d'angle de rotation de la seconde broche (21) étant introduit dans le dispositif (6) de réglage en tant que valeur nominale, et une valeur anormale variant périodiquement en correspondance avec l'attaque des dents qui varie, procédé caractérisé en ce que la valeur anormale ou perturbatrice est mémorisée pendant au moins une période et en ce que l'évolution mémorisée de la valeur anormale est ajoutée au cours d'une période suivante, en synchronisme avec un signal (23) établi indépendamment de la valeur anormale, à la valeur (19) de commande du dispositif de régulation.

2. Procédé selon la revendication 1, caractérisé en ce que l'on utilise comme signal (23) un signal de repère qui marque chacune des révolutions complètes de la broche (21) d'outil.

3. Procédé selon la revendication 1, caractérisé en ce que le signal (23) est obtenu à partir du signal (16) de la mesure effectuée par le capteur (4) d'angle de la broche (22) de pièce à usiner.

4. Procédé selon l'une des revendications 1 à 3, caractérisé en ce que l'on utilise l'écart (17) de régulation pour déterminer la valeur anormale.

5. Procédé selon la revendication 4, caractérisé en ce que l'écart (17) de régulation est mémorisé séquentiellement au cours d'une période dans chacune des mémoires d'un groupe de plusieurs mémoires (10) ; en ce que le contenu de chacune des mémoires (10) est intégré dans chacun des intégrateurs (11) et en ce qu'à partir des contenus des intégrateurs (11), un signal (18) de correction est calculé séquentiellement, et en ce que le signal (23) est ajouté de manière synchronisée à la valeur de commande (19) du dispositif (6) de régulation.

6. Procédé selon la revendication 4, caractérisé en ce que l'écart de régulation est mémorisé séquentiellement pendant une période dans chacune des mémoires appartenant à un groupe de plusieurs mémoires (10), en ce que les contenus des mémoires (10) sont ajoutés, en synchronisme avec le signal (23), au contenu de chacune des deuxièmes mémoires (11') correspondantes, et en ce qu'à partir des contenus des secondes mémoires (11') un signal (18) de correction est calculé séquentiellement, lequel est ajouté, de manière synchronisée au moyen du signal (23), à la valeur de commande (19) du dispositif (6) de régulation.

7. Dispositif pour l'exécution du procédé selon une des revendications 1 à 6, la première broche (22) étant reliée au premier capteur (4) d'angle de rotation et la seconde broche (21) étant reliée à un second capteur (2) d'angle de rotation, dispositif caractérisé en ce qu'il comporte un circuit de mémoire (10), destiné à la mémorisation de la partie représentant la valeur anormale, à des intervalles de temps séparés ("discrets") à l'intérieur de la période (T), et un circuit (14) d'addition, destiné à additionner le contenu de la mémoire à la valeur (19) de commande du dispositif (6) de régulation, en synchronisme avec le signal (23).

8. Dispositif selon la revendication 7, caractérisé en ce que le circuit de mémoire comprend plusieurs mémoires (10), et en ce qu'un circuit multiplexeur (9) est connecté en amont des mémoires (10) et peut être commandé par le signal (23).

9. Dispositif selon la revendication 8 pour l'exécution du procédé selon la revendication 5, caractérisé en ce qu'un intégrateur (11) est connecté en aval de chaque mémoire (10), et en ce que les intégrateurs (11) sont reliés, par l'intermédiaire d'un circuit (12) démultiplexeur commandé par le signal (23), au circuit (14) d'addition.

# Fig. 1

# Fig. 2

# Fig. 3